# EUROPÄISCHE PATENTSCHRIFT

(11) **EP 2 773 146 B1**
(45) Veröffentlichungstag und Bekanntmachung des Hinweises auf die Patenterteilung: **09.11.2016**
(21) Anmeldenummer: 14154771.1
(22) Anmeldetag: 12.02.2014
(51) Int. Cl.: H04W 28/18, H04W 36/32

(54) **Verfahren zum Betreiben eines drahtlosen Datennetzes umfassend eine terahertzfähige Sendestation und ein terahertzfähiges, mobiles elektronisches Endgerät**
Method for operating a wireless data network comprising a terahertz capable transmitting station and a terahertz-capable mobile electronic terminal
Procédé de fonctionnement d'un réseau de données sans fil comprenant une station d'émission exploitant les ondes térahertz et un terminal électronique mobile exploitant les ondes térahertz

(30) Priorität: 28.02.2013 DE 102013101987
(43) Veröffentlichungstag der Anmeldung: 03.09.2014
(73) Patentinhaber: Deutsche Telekom AG, 53113 Bonn (DE)
(72) Erfinder: Braun, Ralf-Peter, 12305 Berlin (DE); Preußler, Stefan, 01612 Nünchritz (DE); Grigat, Michael, 64372 Ober-Ramstadt (DE); Schneider, Thomas, 14552 Michendorf (DE); Nolan, Julian Charles, 1009 Pully (CH)
(74) Vertreter: Braun-Dullaeus Pannen Patent- und Rechtsanwälte

(56) Entgegenhaltungen:
- EP-A1- 1 503 548
- WO-A2-2004/086681
- US-A1- 2013 023 274
- US-A1- 2013 023 281

## Beschreibung

Verfahren zum Betreiben eines drahtlosen Datennetzes umfassend eine terahertzfähige Sendestation und ein terahertzfähiges, mobiles elektronisches Endgerät.

Aufgrund des ansteigenden Bedarfs an Datenübertragungskapazität über drahtlose Verbindungskanäle werden die derzeit verwendeten Techniken, z. B. LTE, WLAN, usw. demnächst an ihre Leistungsgrenze stoßen. Daher befasst sich die Forschung mit der Möglichkeit, Informationen über die Terahertzwelle zu verbreiten. Die Terahertzwelle verspricht eine Datenübertragung mit sehr hohen Übertragungsraten.

Die DE 10 2008 020 466 A1 zeigt ein Verfahren zwischen einem Sendemittel und einem Empfangsmittel sowie ein System zur Umsetzung des Verfahrens. So ist z.B. in einer häuslichen Umgebung eine Sendestation vorgesehen, die eine gebündelte elektromagnetische Welle im Terahertzbereich gezielt auf ein Empfangsgerät, beispielsweise einen Laptop oder ein Mobiltelefon übersendet. Über eine andere Datenverbindung, beispielsweise eine herkömmliche WLAN-Verbindung wird die Datenübertragung über die Terahertzwelle eingeleitet.

Die US 2013/0023281 A1 betrifft die Vorhersage der Verbindungsqualität einer Mobilfunkverbindung im Rahmen des Handover-Prozesses zwischen zwei Sendestationen. Ergibt eine Prognose, dass in der Zukunft eine andere Sendestation als die derzeit aktive Sendestation besser für eine Datenverbindung mit Mobilfunkgerät geeignet ist, wird der Handover-Prozess eingeleitet.

Die Terahertzwelle eignet sich bislang lediglich für die Übertragung über sehr geringe Entfernungen im Bereich einiger Meter, da die Terahertzwelle einer recht hohen Dämpfung unterliegt. Um die Datenübertragung möglichst effizient zu gestalten, hat es sich als geeignet herausgestellt, die Verbindung über eine gebündelte elektromagnetische Welle abzuwickeln, was somit Übertragungslängen von ca. 1 km zulassen könnte. Dieser Wert ist aber abhängig von vielen Einflussfaktoren, wie z.B. der Datenrate, der Sendeleistung, der Bandbreite, usw..

Es ist allerdings davon auszugehen, dass ein Terahertzempfang mit wirtschaftlichen Mitteln in absehbarer Zeit flächendeckend (ähnlich der heutigen Mobilfunkversorgung) nicht möglich sein wird. Der Terahertzempfang wird daher vermutlich auf Hotspots beschränkt bleiben, die an gut frequentierten Standorten, beispielsweise öffentliche Plätze, Flughäfen, Bahnhöfen, Hotels, usw. installiert sind. Dabei werden vorzugsweise gebündelte Terahertzwellen eingesetzt, um bestimmte Terahertz-Empfangsbereiche im örtlichen Sinne räumlich auszuleuchten.

Ferner hat sich herausgestellt, dass Hindernisse in der Sendestrecke, beispielsweise Wände, Möbel, aber auch Personen selbst die Datenübertragung mittels Terahertzwellen nachhaltig verschlechtern. So ist also eine möglichst freie Sendestrecke zwischen Sendestation und Endgerät wünschenswert. Zur Umgehung der Hindernisse und für eine Mehrwegeausbreitung können spezielle Reflektoren verwendet werden.

Die Erfindung steht daher vor der Aufgabe, trotz der schwierigen Rahmenbedingungen die Nutzung der Terahertzwelle für die Datenübertragung so komfortabel wie möglich zu gestalten.

Die Erfindung schlägt nun ein Verfahren zum Betreiben eines drahtlosen Datennetzes nach Anspruch 1 vor. Bevorzugte Ausgestaltungen ergeben sich aus den Unteransprüchen.

Der Kern der Erfindung liegt insbesondere darin, dass der Sendebereich der Sendestation insbesondere ununterbrochen überwacht wird und Änderungen in der Umgebung des Sendebereichs ständig aufgenommen werden. Die Änderungen werden dann analysiert. Basierend darauf wird eine erste Prognose über den Zustand von wesentlichen Einflussfaktoren der Umgebung für die Zukunft erstellt. Ziel ist es also, mit der ersten Prognose vorauszusagen, wie sich die Umgebungsparameter zu einem bestimmten Zeitpunkt verändert haben werden, oder allgemeiner, welche Umgebungsparameter zum bestimmten Zeitpunkt vorhanden sein werden. Unter dem Begriff Umgebungsparameter sind alle äußeren Einflussfaktoren zu verstehen, die einen Einfluss auf die Datenverbindung über die Terahertzwelle zwischen der Sendestation und dem Endgerät haben können. Dabei fallen unter die Umgebungsparameter die Position von möglichen Hindernissen, wie Personen, Fahrzeugen oder anderen, beweglichen Gegenständen, die grundsätzlich geeignet erscheinen, die Datenverbindung zu stören. Wenn die Bewegung eines Objektes weitgehend bekannt ist, so kann unter gewissen Annahmen, zum Beispiel Beibehaltung der derzeitigen Bewegungsform, auf eine künftige Position des Objekts geschlossen werden. Durch Auflösen einer Bewegungsgleichung kann beispielsweise die Position des sich mit konstanter Geschwindigkeit bewegenden Fahrzeugs exakt vorhergesagt werden.

Unter den Umgebungsparametern werden die Zustände möglicher Hindernisse erfasst.

Das Erstellen der zweiten Prognose beschäftigt sich mit der Frage, in welchem Zustand sich die Datenverbindung zu einem Zeitpunkt in der Zukunft wahrscheinlich befinden wird (=Verbindungsparameter). Der Zeitpunkt in der Zukunft ist aber insbesondere identisch zu dem Zeitpunkt in der Zukunft, für den die erste Prognose erstellt wurde. Es wird hierbei das Ergebnis der ersten Prognose berücksichtigt. Mit einfachen Worten: welche Auswirkung haben die Änderungen der Umgebung, die in der ersten Prognose festgestellt werden, auf die Datenverbindung zum Zeitpunkt in der Zukunft. So wird beispielsweise das Fahrzeug für den Zeitpunkt in der Zukunft an einem bestimmten Ort angenommen (=Ergebnis der ersten Prognose). Wenn dieser Ort genau in der Sichtlinie zwischen der Sendestation und dem mobilen Endgerät liegt, so kann darauf geschlossen werden, dass die Datenverbindung über die Terahertzwelle dann unterbrochen sein wird.

Der wesentliche Gedanke der Erfindung ist also die doppelte Erstellung einer Prognose, nämlich zum einen die Untersuchung und Prognostizierung der Umgebung, und zum anderen die darauf aufbauende Prognostizierung des Zustands der Datenverbindung. Das Ergebnis des erfindungsgemäßen Verfahrens ist dann also eine Prognose über den Zustand der Datenverbindung zwischen einer Sendestation und dem zugehörigen Endgerät, die die Änderungen in der Umgebung berücksichtigt.

Unter einem terahertzfähigen mobilen Endgerät wird ein solches mobiles Endgerät verstanden, welches zumindest Daten über eine Terahertzwelle von einer Sendestation empfangen kann. Als Terahertzwelle wird eine Trägerwelle mit einer Trägerfrequenz von zumindest 300 GHz verstanden. Besondere geeignet erscheint die Erfindung für den Frequenzbereich ab 1 THz geeignet zu sein. Das terahertzfähige Endgerät muss aber nicht zwangsläufig in der Lage sein, Daten über die Terahertzwelle auszusenden.

In einer bevorzugten Ausgestaltung wird durch das Erfassen der Umgebungsparameter eine Bewegung eines Objekts im Sendebereich der Sendestation erkannt.

Die Erfindung schlägt ferner einige Möglichkeiten vor, wie die Umgebungsparameter erfasst werden können. In einer ersten bevorzugten Ausgestaltung ist vorgesehen, dass das Erfassen der Umgebungsparameter mittels einer Sichtfelderfassungseinrichtung erfolgt. Dies kann eine optische Kamera oder ein Radargerät sein. Eine solche Sichtfelderfassungseinrichtung kann insbesondere ein von der Sendestation ausgehendes Sichtfeld erfassen. Um das von der Sendestation ausgehende Sichtfeld zu erfassen, ist es bevorzugt vorgesehen, dass die Kamera oder das Radargerät bzw. jede andere geeignete Sichtfelderfassungseinrichtung im Wesentlichen am selben Ort wie die Sendestation angeordnet ist. Die Sichtfelderfassungseinrichtung blickt also im Wesentlichen in dieselbe Richtung, in der die gebündelte Terahertzwelle ausgestrahlt wird. Wenn also ein Hindernis von der Kamera in einer gewissen Richtung erkannt wird, so kann angenommen werden, dass sich dieses Hindernis auch in selbiger Richtung von der Sendestation aus betrachtet befindet. Die Auswirkungen der durch die Sichtfelderfassungseinrichtung ermittelten Objekte auf die Verbindungsqualität kann damit sehr zuverlässig ermittelt werden.

In einer weiteren bevorzugten Ausgestaltung kann das Erfassen der Umgebungsparameter mit zumindest einer Sonde, insbesondere mehrerer Sonden, erfolgen. Die Sonden sind in einem Sendebereich der Sendestation angeordnet und beabstandet zu der Sendestation angeordnet. Durch solche Sonden kann eine Art Triangulation vorgenommen werden, anhand derer Objekte im Sendebereich erkannt werden können. Durch die Sonden können beispielsweise die Terahertzwellen, die von der Sendestation ausgestrahlt werden, erfasst und analysiert werden. Sollte beispielsweise die Sendestation eine Terahertzwelle in Richtung einer der Sonden senden, die Sonde empfängt allerdings keine Terahertzwelle, so ist von der Anwesenheit eines Objekts zwischen Sendestation und Sonde auszugehen. Auf diese Weise können beispielsweise die Zwischenräume zwischen mehreren Sonden untereinander und dem Zwischenraum zwischen der Sendestation und einer Sonde überwacht werden. Ein Objekt kann so auch nachverfolgt werden, woraus wiederum auf eine Bewegung des Objekts geschlossen werden kann. Diese Bewegung des Objekts kann wiederum Grundlage für das Erstellen der ersten Prognose sein. Eine Sonde kann im Wesentlichen eine Sende- oder Empfangsstation für elektromagnetische Wellen sein, deren relative Position zur Sendestation vorzugsweise bekannt ist. Eine solche Sonde kann auch durch das Endgerät selbst gebildet sein; mehrere Endgeräte, die im Sendebereich der Sendestation in Datenkommunikation über die Terahertzwelle mit der Sendestation treten können, können jeweils eine Sonde bilden.

Eine Sonde kann alternativ oder in Kombination zu dem Empfang der Terahertzwellen auch andere elektromagnetische Wellen empfangen und analysieren, die nicht auf der Terahertzwelle basieren. So können die Sonden beispielsweise auch Mobilfunksignale oder sonstige ausgesendete elektromagnetische Wellen möglicher Objekte erkennen. Beispielsweise in mittelbarer Nähe eines Mobilfunkgerätes wird in der Regel auch ein Hindernis vermutet werden, insbesondere eine Person, die das Mobiltelefon trägt, oder ein Fahrzeug, in dem das Mobiltelefon fest installiert ist. Durch die Triangulation beispielsweise über die Mehrzahl der Sonden bzw. die Sendestation kann dann die Position des Mobilfunkgerätes bzw. der Antenne ermittelt werden; dessen sich ändernde Position kann nachverfolgt werden.

Wenn elektromagnetische Wellen, die von möglichen Objekten ausgesendet werden, empfangen und analysiert werden, ist es vorteilhaft, wenn Kennungen, die diesen Objekten zugeordnet sind und in den elektromagnetischen Wellen enthalten sind, ausgewertet werden. Ein Mobiltelefon, welches beispielsweise fest an einem Fahrzeug installiert ist, kann eine Kennung mitsenden, die Rückschlüsse auf den Fahrzeugtyp hat. In einer Datenbank kann dann abgerufen werden, welche Außenmaße dieser Fahrzeugtyp aufweist. Bei der Erstellung der ersten bzw. zweiten Prognose können dann die Maße des Objekts, die anhand der Kennung ermittelt werden, berücksichtigt werden.

Wenn nun die zweite Prognose erstellt wurde und dabei die geänderten Umgebungsparameter für die Zukunft berücksichtigt wurden, so kann anhand dieser zweiten Prognose Folgendes durchgeführt werden:
Es wird vorzugsweise eine Neuvergabe von Sendeprioritäten für die Datenverbindung über die gebündelte Terahertzwelle vorgenommen. Das Vergeben von Sendeprioritäten kann im Wesentlichen die Vergabe von festen Sendezeiten zwischen der Sendestation und dem Endgerät umfassen. Sollte also beispielsweise festgestellt werden, dass in etwa zwei Sekunden eine sehr gute Datenverbindung vorhanden ist, so erhält eine Anwendung, die auf diesen mobilen Endgeräten abläuft, eine feste Zuweisung eines "Sendeplatzes" von z.B. einer Sekunde. Dabei liegt die Erkenntnis zugrunde, dass über die Terahertzwelle eine enorme Datenmenge in kurzer Zeit transportiert werden kann. So wird es möglich sein, den Inhalt einer gesamten DVD in weniger als einer Sekunde über die Terahertzwelle zu übermitteln. Da die Datenverbindung über die Terahertzwelle nur für einen sehr kurzen Zeitraum benötigt wird, muss allerdings sichergestellt werden, dass diese Verbindung in dieser einen Sekunde höchst zuverlässig zur Verfügung gestellt werden kann. Daher ist diese Vorplanung der Sendezeit, die anhand der Prognosen erstellt werden kann, von großer Bedeutung für die künftige hochbitratige Datenübertragung über die Terahertzwelle.

Der Haupterkenntnis, die diesem Vorgehen zugrunde liegt heißt:

Es ist von geringerer Bedeutung, zu welchem Zeitpunkt exakt eine Datenverbindung über die Terahertzwelle vorliegen muss; ferner muss die Datenverbindung auch nicht besonders lange verfügbar sein. Es ist nur sehr wichtig, dass bekannt ist, wann eine Datenverbindung mit hoher Wahrscheinlichkeit vorhanden sein wird, und dass diese Datenverbindung dann für einen kurzen Zeitraum auch stabil aufrechterhalten wird.

Weiter ist es von Vorteil, wenn die Prognosen (die erste Prognose, die zweite Prognose oder auch beide) kontinuierlich wiederkehrend erstellt werden, d.h. also laufend aktualisiert werden. Dies ist insbesondere von Vorteil, wenn die Änderungen der Umgebung nicht besonders zuverlässig vorhersagbar sind, beispielsweise bei Bewegungen, die keine erkennbare Regelmäßigkeit aufweist.

Bevorzugt erfolgt die Neuvergabe der Sendeprioritäten unter Berücksichtigung von Anwendungen, die insbesondere derzeit auf dem Endgerät ablaufen und welche die Datenverbindung über die gebündelte Terahertzwelle nutzen oder für die eine Nutzung in der Zukunft vorgesehen ist.

Im Wesentlichen wird die Dringlichkeit einer Datenverbindung durch die Anwendung vorgegeben. Soll beispielsweise ein hochauflösendes Video ausgegeben werden, und für eine unterbrechungsfreie Wiedergabe ist es erforderlich, dass innerhalb der nächsten Sekunden eine Datenverbindung aufgebaut wird, so wird einer solchen Anwendung eine recht hohe Sendepriorität zugeordnet. Eine Anwendung hingegen, die zwar auch eine große Datei herunterladen möchte, hierfür aber noch deutlich mehr Zeit zur Verfügung steht, wird eine niedrigere Sendepriorität erhalten. Ferner wird die Priorität auch anhand der zweiten Prognose festgelegt. Sollten beispielsweise die Anwendungen, die auf zwei unterschiedlichen Endgeräten ablaufen, ähnliche Dringlichkeit haben, das eine Gerät wird allerdings in einer Sekunde in einer stabilen Position für eine Datenverbindung sein, ein anderes Endgerät allerdings erst in fünf Sekunden, so wird eine höhere Sendepriorität für das erste Endgerät für die nächste Sekunde eingestellt. Anhand der Sendeprioritäten werden also im Wesentlichen Sendeplätze vergeben, während denen eine Datenverbindung über die Terahertzwelle vorhanden ist.

Vorzugsweise wird aufgrund der zweiten Prognose eine Verbindung zwischen einer anderen terahertzfähigen Sendestation und dem Endgerät aufgebaut wird. Dies ist dann möglich, wenn das Endgerät im räumlichen Empfangsbereich zweier terahertzfähigen Sendestationen liegt und die zweite Prognose ergibt, dass die Datenverbindung zwischen der einen Sendestation zum Zeitpunkt in der Zukunft unterbrochen sein wird. Es besteht aber laut zweiter Prognose die Möglichkeit, eine Dätenverbindung über die andere Sedestation aufzubauen. Sodann wird die Datenverbindung über die zweite Sendestation aufgebaut, um das Endgerät nach wie vor mit Daten versorgen zu können.

Die Erfindung wird anhand der Figuren näher erläutert.
- Figur 1: zeigt ein drahtloses Datennetz, welches nach dem erfindungsgemäßen Verfahren betrieben wird;
- Figur 2: den Ablauf des erfindungsgemäßen Verfahrens in einem Blockschaltbild.

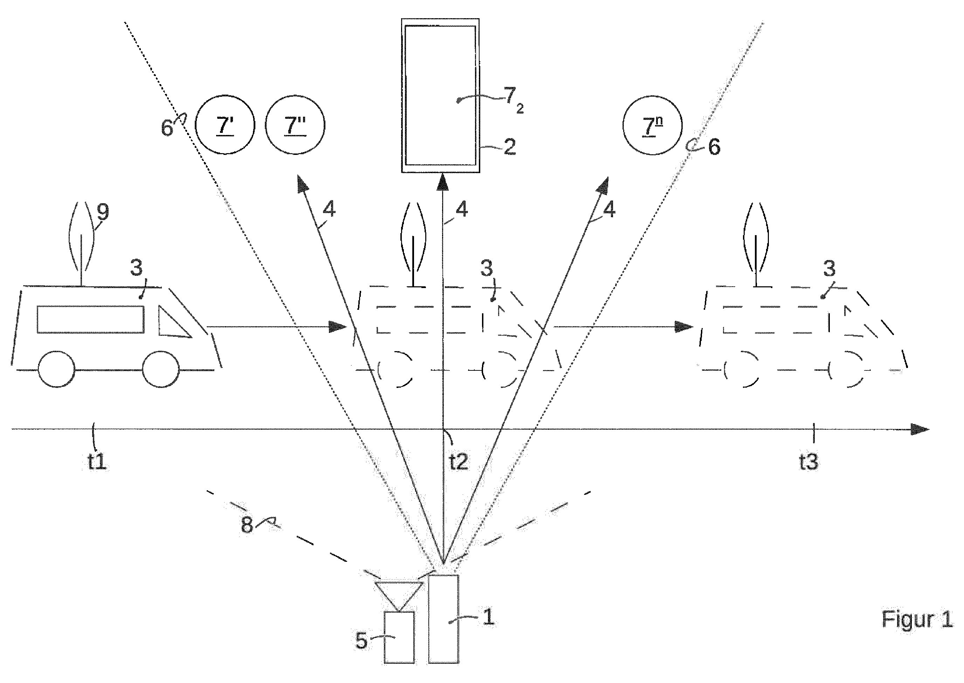

In Figur 1 ist ein drahtloses Datennetz zu erkennen, welches eine Sendestation 1 sowie ein Mobiltelefon als mobiles elektronisches Endgerät 2 (in Folgendem "Mobiltelefon 2", stellvertretend für andere mobile elektronische Endgeräte) umfasst. Im Betrieb sendet die Sendestation 1 Terahertzwellen 4 in gebündelter Form aus. Die Terahertzwellen 4 können dann von dem Mobiltelefon 2 empfangen werden. Die Sendestation 1 kann mehrere solcher gebündelter Terahertzwellen 4 ausstrahlen. Jeder Terahertzwelle 4 ist dabei eine eigene Richtung zugewiesen.

Aufgrund der hohen Dämpfung der Terahertzwelle 4 durch verdeckende Objekte im Strahlverlauf ist es von Bedeutung, dass während einer Datenverbindung stets eine freie Sichtbahn 1 zwischen der Sendestation 1 und dem Mobiltelefon 2 vorliegt, um eine möglichst störungsfreie Verbindung bereitzustellen. In Figur 1 bezeichnet dabei das Bezugszeichen 6 im weitesten Sinne den räumlichen Sendebereich der Sendestation 1. In diesem Sendebereich kann die Sendestation 1 Terahertzwellen gebündelt versenden. Nur Mobiltelefone 2, die in diesem Sendebereich 6 angeordnet sind, können mit der Terahertzwelle 4 versorgt werden.

Als mögliches Objekt 3, welches die Terahertzwelle 4 unterbrechen kann, da es sich in die Sichtverbindung zwischen Sendestation und Mobiltelefon 2 bewegen kann, ist ein Objekt 3 gezeigt, beispielsweise ein Fahrzeug. Das Objekt 3 ist zum Zeitpunkt t1 außerhalb des Sendebereichs 6 angeordnet und daher unschädlich für die Datenverbindung. Allerdings bewegt sich das Objekt 3 und wird zum Zeitpunkt t2 genau in der Sichtverbindung zwischen der Sendestation 1 und dem Mobiltelefon 2 sein. Zum Zeitpunkt t2 wird also die Datenverbindung zwischen der Sendestation 1 und dem Mobiltelefon 2 über die Terahertzwelle 4 höchstwahrscheinlich unterbrochen sein. Das Fahrzeug 3 bewegt sich aber weiter und wird zum Zeitpunkt t3 außerhalb des Senderbereichs 6; die Datenverbindung 4 zwischen der Sendestation 1 und dem Mobiltelefon 2 kann dann wieder hergestellt werden.

Über die Terahertzwelle 4 kann eine sehr große Datenmenge pro Zeiteinheit übersendet werden. So kann es ausreichen, dass eine Datenverbindung zwischen der Sendestation und dem Mobiltelefon lediglich für eine Sekunde oder sogar weniger vorhanden ist, um eine Datenmenge vom Umfang einer gesamten DVD zu übertragen. Es muss nur sichergestellt sein, dass für diesen Zeitraum von z.B. einer Sekunde, die Datenverbindung hergestellt ist.

Um nun einen Zeitpunkt für die Übertragung der Datenverbindung festzulegen ist es erfindungsgemäß vorgesehen, dass die Umgebung der Sendestation 1 und des Mobiltelefons 2 überwacht wird. So ist eine Sichtfeldüberwachungseinrichtung 5 vorgesehen, beispielsweise in Form einer optischen Kamera 5 oder eines Radargerätes, welches ein Sichtfeld 8 überwacht. In dem Sichtfeld 8 befindet sich auch das Objekt 3 zum Zeitpunkt t1. Durch kontinuierliche Überwachung des Objekts 3 wird erkannt, dass dieses sich mit konstanter Geschwindigkeit von links nach rechts bewegt. Es ist dabei ohne Weiteres auszurechnen, dass zum Zeitpunkt t2 das Objekt 3 die Datenverbindung zwischen der Sendestation 1 und dem elektronischen Endgerät 2 unterbrechen wird. Insofern ist es erforderlich, dass die geplante Datenübertragung zu einem anderen Zeitpunkt stattfindet, beispielsweise zum Zeitpunkt t3, zu dem sich das Objekt 3 wieder aus dem Sendebereich 6 entfernt hat. Über die Kamera oder das Radar 5 wird auch die exakte Position des Mobiltelefons 2 ermittelt, so dass die Sendestation so eingestellt wird, dass die Terahertzwelle 4 genau auf das Mobiltelefon 2 gerichtet ist.

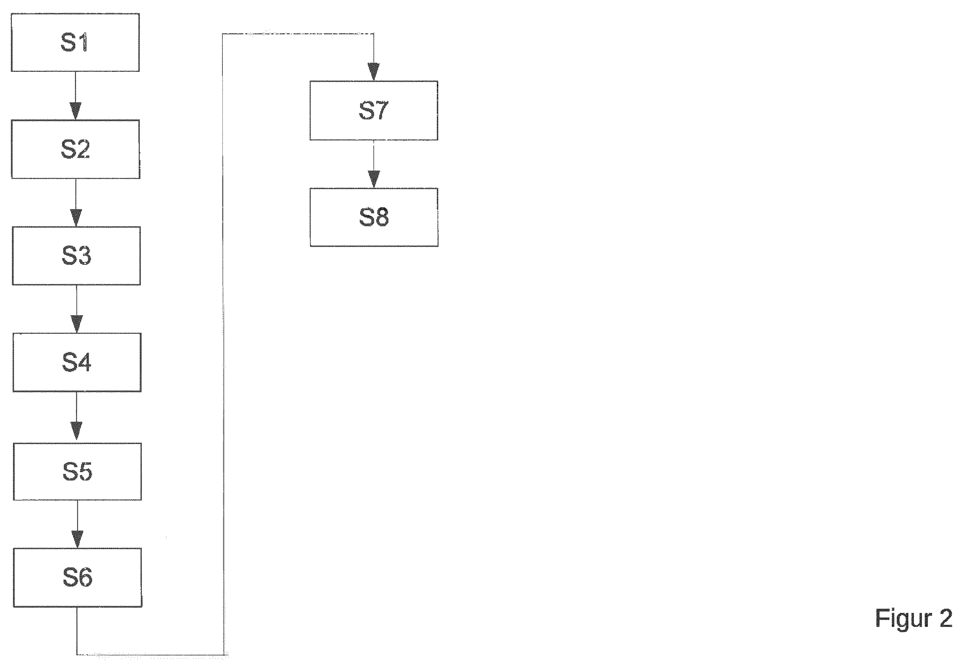

Dieser vorstehend erläuterte Ablauf ist auch in dem Blockschaltbild nach Figur 2 vorhanden. In einem ersten Schritt S1 erfolgt also das Erfassen des sich bewegenden Fahrzeugs 3 im linken Bereich des Sichtfeldes 8. Im Schritt S2 wird die erfasste optische Information analysiert und festgestellt, dass sich das Fahrzeug mit etwa konstanter Geschwindigkeit nach rechts bewegt. Im Schritt S3 wird eine erste Prognose erstellt, nämlich dass zum Zeitpunkt t2 sich das Fahrzeug 3 exakt in der Sichtlinie zwischen der Sendestation 1 und dem Mobiltelefon 2 befindet. Es wird eine weitere erste Prognose erstellt, dass zum Zeitpunkt t3 das Fahrzeug bereits außerhalb des Sendebereichs 6 sein wird. Im Schritt S4 wird zum Beispiel festgestellt, dass derzeit eine Datenverbindung zwischen der Sendestation 1 und dem Mobiltelefon 2 besteht, und dass die Datenrate eine gewisse Größe umfasst. Im Schritt S5 wird die erste Prognose und die aktuellen Verbindungsparameter analysiert. Anhand der Analyse wird dann eine zweite Prognose im Schritt S6 erstellt. Hier wird festgestellt, dass zum Zeitpunkt t2 die Verbindung zwischen Sendestation 1 und Mobiltelefon 2 getrennt sein wird. Es wird eine weitere zweite Prognose für den Zeitpunkt t3 ermittelt. Zum Zeitpunkt t3 ist die Verbindung wieder hergestellt.

Das Ergebnis des Schrittes S6, also die zweite Prognose, wird nun weiter verwendet. In einem Schritt S7 werden nun Anwendungen, die auf dem Endgerät 2 ablaufen und die Terahertzwelle 4 zur Datenübertragung nutzen, analysiert. Hierbei kann zum Beispiel festgestellt werden, dass der Nutzer sich ein Video auf YouTube ansieht und sein Speicher noch gefüllt ist für das Anzeigen des Videos von ca. zehn Sekunden. Insofern ist es akzeptabel für diese Anwendung, wenn innerhalb der nächsten fünf Sekunden die Verbindung für etwa zwei Sekunden unterbrochen sein wird. Im Schritt S8 erfolgt daher eine Herabstufung der Priorität der Datenverbindung für diese Anwendung, so dass andere Anwendungen auf anderen oder demselben Mobiltelefon Vorrang haben.

So kann beispielsweise in einem Schritt S7 ermittelt werden, dass auf einem anderen Endgerät ebenfalls eine Anwendung abläuft, in der ein YouTube-Video angesehen wird. Allerdings ist dort der Speicher bereits in fünf Sekunden leer, so dass vor Ablauf der nächsten fünf Sekunden eine hochbitratige Datenverbindung zwischen der Sendestation aufgebaut werden muss. Allerdings ist in fünf Sekunden genau das Fahrzeug 3 zwischen der Sendestation und dem Mobiltelefon, so dass dann die Datenverbindung eben nicht möglich sein wird. Dieses zweite Endgerät und die darauf ablaufende Anwendung erhält nun eine hohe Sendepriorität, so dass innerhalb der nächsten zwei Sekunden die Verbindung hergestellt ist und der Download des YouTube-Videos in den nächsten drei Sekunden vollzogen sein wird.

Weitere Beispiele für die einzelnen Schritte. Im Schritt S1 kann die Umgebung nicht nur anhand der Kamera oder des Radars erfasst werden; vielmehr kann auch die Umgebung dadurch erfasst werden, dass elektromagnetische Wellen, die beispielsweise von den Objekten ausgesendet werden, erfasst werden. Dieses Erfassen kann durch Sonden 7 erfolgen, die im Sendebereich 6 fest installiert sind. Eine Sonde muss aber nicht fest installiert sein, sondern kann sich auch bewegen. Auch das Mobiltelefon 2 kann als solche Sonde 7 dienen; daher ist dieses zusätzlich mit dem Bezugszeichen 7₂ versehen. So sendet beispielsweise das Fahrzeug 3 über seine Antenne ein Mobilfunksignal 9 aus, welches nicht eine Terahertzwelle sein muss, sondern eine übliche GSM-Verbindung nutzt. Die einzelnen Sonden 7, die beabstandet zur Sendestation 1 angeordnet sind, empfangen die so ausgesendeten elektromagnetischen Wellen 9. Zum Beispiel kann durch Laufzeitunterschiede der elektromagnetischen Wellen zu den einzelnen Sonden 7 auf den Ursprungsort der elektromagnetischen Wellen geschlossen werden, also zum Beispiel auf die Position links des Sendebereichs 6, in der das Fahrzeug 3 zum Zeitpunkt t1 gezeigt ist.

Die elektromagnetische Welle, die beispielsweise von dem Fahrzeug aus gesendet wird, kann auch eine Kennung enthalten, die benutzt werden kann, um das Objekt näher zu charakterisieren. Falls beispielsweise das Objekt 3 ein Fahrzeug ist und ein fest eingebautes Mobiltelefon umfasst, so kann die Kennung eine Angabe darüber enthalten, um welchen Fahrzeugtyp es sich handelt. Die Kennung kann aber auch dazu benutzt werden, um in einer Datenbank nähere Informationen über das Objekt abzufragen.

In einer anderen Ausgestaltung können die Sonden auch die Terahertzwellen 4 untersuchen, die von der Sendestation ausgesendet werden. So wird beispielsweise die Datenverbindung zwischen der Sendestation 1 über die Terahertzwelle 4 zur Sonde 7' durch das Fahrzeug 3 früher unterbrochen werden als die Datenverbindung über die Terahertzwelle 4 zwischen der Sendestation 1 und der Sonde 7", wenn sich das Fahrzeug 3 von links nach rechts bewegen wird. Auch hieraus kann dann ermittelt werden, dass zum Zeitraum t2 (und auch kurz davor bzw. danach) das Fahrzeug 3 zwischen der Sendestation 1 und dem Mobiltelefon 2 angeordnet ist.

Weitere Beispiele zur Prioritätenvergabe nach Schritt S8.

Wie bereits ausgeführt, können die Sendeprioritäten so verteilt werden, dass zum Beispiel der auf einem Endgerät ablaufenden Anwendung ein Sendezeitpunkt in ca. zwei Sekunden zugeteilt wird, während die Anwendung, die auf einem anderen Endgerät abläuft, in etwa sieben Sekunden einen Sendezeitraum erhält.

Eine Anwendung kann allerdings auch vollständig von der "Terahertzwellenberechtigung" entfernt werden, nämlich dann, wenn die Echtzeitbedingungen der Anwendung nicht sehr hoch sind oder die geforderte Datenrate auch über eine andere Verbindung erreichbar ist. So kann die Sendepriorität faktisch auf Null gesetzt werden, was zur Folge hat, dass die Anwendung auf die parallel vorhandene GSM-Verbindung vollständig auszuweichen hat.

Ferner ist es vorteilhaft, wenn neben der gezeigten Sendestation 1 noch weitere Sendestationen vorhanden sind, die zumindest teilweise überlappende räumliche Sendebereiche aufweisen. Sollte eine der Sendestationen aufgrund ungünstiger Umgebungsparameter nicht für eine Datenverbindung zum Endgerät zur Verfügung stehen, kann die Datenverbindung durch eine andere Sendestation sichergestellt werden. Durch das Erstellen der Prognosen kann das Umschalten auf eine andere Sendestation reibungslos verlaufen. Bei den Terahertzwellen ist die Vorplanung eines solchen Umschaltens auf eine andere Sendestation sehr wichtig, da die Verbindung durch ein eintretendes Hindernis in der Sendestrecke schlagartig unterbrochen wird. Im Gegensatz kündigt sich bei herkömmlichen Mobilfunksystem der Abbruch einer Datenverbindung durch eine kontinuierliche Verschlechterung selbst an, wodurch genügend Zeit zum Wechseln der Sendestation bleibt.

### Bezugszeichenliste

- 1: Sendestation
- 2: Endgerät
- 3: Objekt
- 4: Terahertzwelle
- 5: Kamera
- 6: Sendebereich
- 7: Sonde
- 8: Blickfeld der Kamera
- 9: elektromagnetische Wellen

- t: Zeitpunkt

## Patentansprüche

1. Verfahren zum Betreiben eines drahtlosen Datennetzes, wobei Daten von einer terahertzfähigen Sendestation (1) mittels einer gebündelten Terahertzwelle (4) zu einem terahertzfähigen, mobilen elektronischen Endgerät (2) gesendet werden, umfassend die folgenden Verfahrensschritte:
**Erfassen** (S1) eines beweglichen Objekts (3), welches die Datenverbindung zwischen der Sendestation (1) und dem Endgerät (2) über die gebündelte Terahertzwelle (4) stören kann,
**Analysieren** (S2) der Bewegung des Objekts (3),
**Erzeugen (S3) einer ersten Prognose** zu einem Zeitpunkt (t2, t3) in der Zukunft, wobei die erste Prognose eine wahrscheinliche Position des Objekts (3) für den Zeitpunkt (t2, t3) in der Zukunft umfasst,
**Erfassen** (S4) von aktuellen Verbindungsparametern einer momentanen THz-Datenverbindung zwischen der Sendestation (1) und dem Endgerät (2),
**Analysieren** (S5) der ersten Prognose und der aktuellen Verbindungsparameter, und
**Erzeugen (S6) einer zweiten Prognose** über die Auswirkungen, die das Objekt (3) in der für den Zeitpunkt (t2, t3) vorausgesagte Position auf die Verbindungsparameter der Datenverbindung zwischen der Sendestation (1) und dem Endgerät (2) ausüben wird.

2. Verfahren nach dem vorherigen Anspruch,
**dadurch gekennzeichnet,**
**dass** das Erfassen des Objekts mittels einer Sichtfelderfassungseinrichtung, insbesondere einer optischen Kamera oder einem Radargerät erfolgt, die insbesondere ein von der Sendestation (1) ausgehendes Sichtfeld (8) erfassen kann.

3. Verfahren nach einem der vorherigen Ansprüche,
**dadurch gekennzeichnet,**
**dass** das Erfassen des Objekts mittels zumindest einer Sonde (7) erfolgt, die in einem Sendebereich (6) der Sendestation (1) beabstandet zu der Sendestation (1) angordnet ist.

4. Verfahren nach dem vorherigen Anspruch,
**dadurch gekennzeichnet,**
**dass** die zumindest eine Sonde (7) Terahertzwellen (4), die von der Sendestation (1) ausgesendet werden, empfängt und dass die empfangenen Terahertzwelle (4) analysiert werden.

5. Verfahren nach Anspruch 3 oder 4,
**dadurch gekennzeichnet,**
**dass** die Sonde (7) elektromagnetische Wellen (9) empfängt, die von elektronischen Endgeräten (2, 3) in der Umgebung des Sendebereichs (6) ausgesendet werden, und dass diese empfangenen elektromagnetischen Wellen (9) auf deren Ursprungsort hin analysiert werden.

6. Verfahren nach Anspruch 3, 4 oder 5,
**dadurch gekennzeichnet,**
**dass** Objekten (3) zugeordnete elektronische Endgeräte eine die Objekte (3) charakterisierende Kennung aussenden und dass anhand der Kennung räumliche Informationen zu diesem Objekt (3) identifiziert werden.

7. Verfahren nach einem der vorherigen Ansprüche
**dadurch gekennzeichnet,**
**dass** anhand der zweiten Prognose eine Neuvergabe (S8) von Sendeprioriäten für die Datenverbindung über die gebündelte Terahertzwelle vorgenommen wird.

8. Verfahren nach dem vorherigen Anspruch,
**dadurch gekennzeichnet,**
**dass** die Neuvergabe der Sendeprioriäten unter Berücksichtigung (S7) von Anwendungen, welche insbesondere derzeit auf dem Endgerät ablaufen und welche die Datenverbindung über die gebündelte Terahertzwelle nutzen oder nutzen möchten, durchgeführt wird.

9. Verfahren nach einem der vorherigen Ansprüche,
**dadurch gekennzeichnet,**
**dass** aufgrund der zweiten Prognose eine Verbindung zwischen einer anderen terahertzfähigen Sendeeinheit und dem Endgerät aufgebaut wird.

10. Verfahren nach einem der vorherigen Ansprüche,
**dadurch gekennzeichnet,**
**dass** die erste und/der die zweite Prognosen kontinuierlich wiederkehrend erzeugt werden.

11. Drahtloses Datennetzes, welches durch das Verfahren nach einem der vorherigen Ansprüche betrieben wird.

## Claims

1. A method for operating a wireless data network, wherein data is transmitted from a terahertz-capable transmitting station (1) by means of a bundled terahertz wave (4) to a terahertz-capable mobile electronic terminal (2), the method comprising the following process steps:
detecting (S1) a moving object (3), which may interfere with the data connection between the transmitting station (1) and the terminal (2) via the bundled terahertz wave (4),
analysing (S2) the movement of the object (3),
producing (S3) a first prognosis at a point in time (t2, t3) in the future, wherein the first prognosis comprises a probable position of the object (3) for the point in time (t2, t3) in the future,
detecting (S4) current connection parameters of a momentary THz data connection between the transmitting station (1) and the terminal (2),
analysing (S5) the first prognosis and the current connection parameters, and
producing (S6) a second prognosis relating to the effects, which the object (3) will exert in the position predicted for the point in time (t2, t3) on the connection parameters of the data connection between the transmitting station (1) and the terminal (2).

2. The method according to the preceding claim,
**characterised in**
**that** detecting the object is effected by means of a view field detection device, in particular an optical camera or a radar device, which in particular can detect a view field (8) starting from the transmitting station (1).

3. The method according to one of the preceding claims,
**characterised in**
**that** detecting the object is effected by at least one probe (7), which is arranged within a transmission range (6) of the transmitting station (1), which is spaced apart from the transmitting station (1).

4. The method according to the preceding claim,
**characterised in**
**that** the at least one probe (7) receives terahertz waves (4) transmitted by the transmitting station (1) and in that the received terahertz waves (4) are analysed.

5. The method according to claim 3 or 4,
**characterised in**
**that** the probe (7) receives electromagnetic waves (9) which are emitted by electronic terminals (2, 3) in the vicinity of the transmission range (6), and in that these received electromagnetic waves (9) are analysed with regard to their place of origin.

6. The method according to claim 3, 4 or 5,
**characterised in**
**that** electronic terminals assigned to objects (3) emit an identifier characterising the objects (3) and in that spatial information on this object (3) is identified by means of the identifier.

7. The method according to one of the preceding claims,
**characterised in**
**that** a reallocation (S8) of transmission priorities for the data connection via the bundled terahertz wave is based on the second prognosis.

8. The method according to the preceding claim,
**characterised in**
**that** the reallocation of the transmission priorities is carried out taking into account (S7) applications currently running on the terminal and which use, or would like to use, the data connection via the bundled terahertz wave.

9. The method according to one of the preceding claims,
**characterised in**
**that** based on the second prognosis a connection is established between another terahertz-capable transmitting unit and the terminal.

10. The method according to one of the preceding claims,
**characterised in**
**that** the first and/or the second prognosis are produced in a continuously recurring manner.

11. A wireless data network, which is operated by the method according to one of the preceding claims.

## Revendications

1. Procédé de fonctionnement d'un réseau de données sans fil, dans lequel des données provenant d'une station d'émission (1) fondée sur terahertz sont émises au moyen d'une onde terahertz (4) groupée en faisceau vers un terminal électronique mobile (2), fondé sur terahertz, comprenant les étapes de procédé suivantes :
détection (S1) d'un objet mobile (3), qui peut perturber la liaison de données entre la station d'émission (1) et le terminal (2) par l'intermédiaire de l'onde terahertz (4) groupée en faisceau,
analyse (S2) du mouvement de l'objet (3),
génération (S3) d'une première prévision à un point temporel (t2, t3) dans l'avenir, dans lequel la première prévision comprend une position probable de l'objet (3) pour le point temporel (t2, t3) dans l'avenir,
détection (S4) des paramètres de liaison actuels d'une liaison de données THz momentanée entre la station d'émission (1) et le terminal (2),
analyse (S5) de la première prévision et des paramètres de liaison actuels et
génération (S6) d'une deuxième prévision relative aux répercussions, que l'objet (3) peut exercer dans la position prédite pour le point temporel (t2, t3) sur les paramètres de liaison de la liaison de données entre la station d'émission (1) et le terminal (2).

2. Procédé selon la revendication précédente,
**caractérisé en ce**
**que** la détection de l'objet a lieu au moyen d'un moyen de détection de champ visuel, notamment d'une caméra optique ou d'un appareil radar, qui peut détecter notamment un champ visuel (8) partant de la station d'émission (1).

3. Procédé selon une des revendications précédentes,
**caractérisé en ce**
**que** la détection de l'objet a lieu au moyen d'au moins une sonde (7), qui est disposée dans une zone d'émission (6) de la station d'émission (1) à distance de la station d'émission (1).

4. Procédé selon la revendication précédente,
**caractérisé en ce**
**qu'**au moins une sonde (7) reçoit des ondes terahertz (4), qui sont émises par la station d'émission (1), et en ce que les ondes terahertz reçues (4) sont analysées.

5. Procédé selon la revendication 3 ou 4,
**caractérisé en ce**
**que** la sonde (7) reçoit des ondes électromagnétiques (9), qui sont émises par des terminaux électroniques (2, 3) dans l'environnement de la zone d'émission (6) et en ce que ces ondes électromagnétiques reçues (9) sont analysées sur leur lieu d'origine.

6. Procédé selon la revendication 3, 4 ou 5,
**caractérisé en ce**
**que** des terminaux électroniques coordonnés aux objets (3) émettent une identification caractérisant les objets (3) et en ce que sur la base de l'identification des informations spatiales relatives à cet objet (3) sont identifiées.

7. Procédé selon une des revendications précédentes,
**caractérisé en ce**
**que** sur la base de la deuxième prévision une nouvelle attribution (S8) de priorités d'émission pour une liaison de données par l'intermédiaire de l'onde terahertz groupée en faisceau est entreprise.

8. Procédé selon la revendication précédente,
**caractérisé en ce**
**que** la nouvelle attribution des priorités d'émission est effectuée en prenant en compte (S7) des applications, qui s'exécutent notamment actuellement sur le terminal et qui utilisent ou peuvent utiliser l'onde terahertz groupée en faisceau.

9. Procédé selon une des revendications précédentes,
**caractérisé en ce**
**que** sur la base de la deuxième prévision une liaison entre une autre unité d'émission fondée sur terahertz et le terminal est établie.

10. Procédé selon une des revendications précédentes,
**caractérisé en ce**
**que** la première et/ou deuxième prévision sont générées de manière récurrente en continu.

11. Réseau de données sans fil, qui est mis en fonctionnement par le procédé selon une des revendications précédentes.
